# EUROPEAN PATENT SPECIFICATION

(11) **EP 4 075 336 B1**
(45) Date of publication and mention of the grant of the patent: **29.11.2023**
(21) Application number: 22150854.2
(22) Date of filing: 11.01.2022
(51) Int. Cl.: G06K 19/077, G06K 19/07

(54) **SUBSTRATE FOR DUAL INTERFACE SMARTCARD AND DUAL INTERFACE SMARTCARD**
SUBSTRAT FÜR EINE DUALE SCHNITTSTELLEN-CHIPKARTE UND DUALE SCHNITTSTELLEN-CHIPKARTE
SUBSTRAT POUR CARTE À PUCE À DOUBLE INTERFACE ET CARTE À PUCE À DOUBLE INTERFACE

(30) Priority: 15.04.2021 SE 2150469
(43) Date of publication of application: 19.10.2022
(73) Proprietor: Fingerprint Cards Anacatum IP AB, 411 19 Göteborg (SE)
(72) Inventor: NILSSON, Henrik, MALMÖ (SE); ROIG, Michel, FURULUND (SE)
(74) Representative: Kransell & Wennborg KB

(56) References cited:
- EP-A1- 3 159 832
- US-A1- 2006 113 381

## Description

### Field of the Invention

The present invention relates to a substrate for a dual interface smartcard, and to a dual interface smartcard comprising such a substrate.

### Background of the Invention

A dual interface smartcard has the capability of interacting with a smartcard terminal either via a contact pad module embedded in the smartcard, or wirelessly using an embedded antenna coil.

Recently, dual interface smartcards with extended functionality have been presented. In some cases, the extended functionality is provided by an auxiliary module, that is also embedded in the smartcard. The extended functionality may, for example, be biometric authentication, or display functionality, etc.

Although providing extended functionality that is beneficial to the user, the additional circuitry of the auxiliary module adds to the cost of the smartcard. Furthermore, additional processing steps involved in the production of such smartcards may impact production yield, which may further add to the cost.

It would therefore be desirable to provide for more cost-efficient production of a dual interface smartcard with a contact pad module and an auxiliary module, in particular to provide for improved production yield.

EP 3 159 832 A1 relates to an authentication token that comprises an authentication module and at least one conductive wire for operatively connecting the authentication module to at least one further module of the token, said at least one conductive wire being embedded in a non-conductive substrate of said token.

### Summary

In view of above-mentioned and other drawbacks of the prior art, it is an object of the present invention to provide for more cost-efficient production of a dual interface smartcard with a contact pad module and an auxiliary module, in particular to provide for improved production yield.

According to the present invention, it is therefore provided a substrate for a dual interface smartcard, the substrate comprising a contact pad module receiving portion; an auxiliary module receiving portion; and a conductor pattern including: an antenna coil having a first end and a second end; a first set of connectors arranged in the contact pad module receiving portion for electrical connection with corresponding connectors of a contact pad module, the first set of connectors including a GND connector for electrical connection with a GND connector of the contact pad module, and a VCC connector for electrical connection with a VCC connector of the contact pad module; a second set of connectors arranged in the auxiliary module receiving portion for electrical connection with corresponding connectors of an auxiliary module, the second set of connectors including a GND connector for electrical connection with a GND connector of the auxiliary module, and a VCC connector for electrical connection with a VCC connector of the auxiliary module, and leads connecting connectors in the first set with connectors in the second set, the leads at least connecting the GND connector in the first set of connectors with the GND connector in the second set of connectors, and connecting the VCC connector in the first set of connectors with the VCC connector in the second set of connectors, wherein one of the GND connector and the VCC connector in the first set of connectors is conductively connected to one of the first end and the second end of the antenna coil.

The present invention is based upon the realization that an important factor influencing the production yield of a dual interface smartcard having an auxiliary module is the total number of electrical connections that need to be formed when the contact pad module and the auxiliary module are implanted in a smartcard substrate.

In addition, the present inventors have realized that, since a dual interface smartcard is never used simultaneously in contact mode and non-contact mode, it would be possible to use the same connector for connection both to one end of the antenna coil that is used for wireless communication and provision of power, and to either a GND (ground) or a VCC (power supply voltage) connector.

Then, when the dual interface smartcard is used in the contact mode, the antenna coil will be connected to GND or VCC of the smartcard terminal. The antenna coil will add some inductance and capacitance, but since GND and VCC are constant potentials, this will not impact the functionality of the smartcard. When the dual interface smartcard is used in non-contact mode, the GND (or VCC) pad of the contact pad module will not be in contact with connectors of the smart card terminal, but will be able to follow the potential of the above-mentioned end of the antenna coil.

Hereby, the total number of electrical connections that need to be formed when the contact pad module and the auxiliary module are implanted in a smartcard substrate can be reduced, which provides for an increased production yield.

The substrate according to embodiments of the present invention may advantageously be included in a dual interface smartcard, further comprising a contact pad module having a set of connectors, the contact pad module being attached to the substrate in the contact pad module receiving portion of the substrate in such a way that the set of connectors of the contact pad module are electrically conductively connected to the first set of connectors of the substrate; and an auxiliary module having a set of connectors, the auxiliary module being attached to the substrate in the auxiliary module receiving portion of the substrate in such a way that the set of connectors of the auxiliary module are electrically conductively connected to the second set of connectors of the substrate.

### Brief Description of the Drawings

These and other aspects of the present invention will now be described in more detail, with reference to the appended drawings showing an example embodiment of the invention, wherein:
Fig 1 is an illustration of a dual interface smartcard according to an example embodiment of the present invention;
Fig 2 is a schematic illustration of a substrate according to an example embodiment of the present invention, comprised in the dual interface smartcard in fig 1;
Figs 3A-C are schematic illustrations of a contact pad module included in the dual interface smartcard in fig 1;
Figs 4A-C are schematic illustrations of an auxiliary module included in the dual interface smartcard in fig 1, here in the form of a fingerprint sensing system module; and
Fig 5 is an exploded view of the dual interface smartcard in fig 1.

### Detailed Description of Example Embodiments

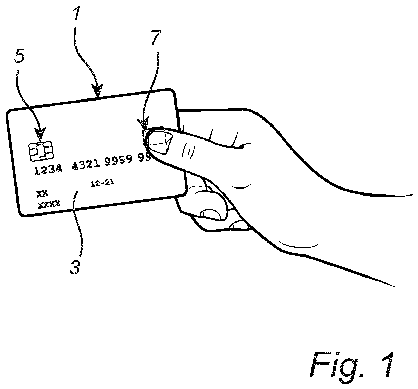

Fig 1 schematically illustrates a dual interface smartcard 1 according to an example embodiment of the present invention, comprising a substrate 3, a contact pad module 5, and an auxiliary module 7, here in the form of a fingerprint sensing system module.

The dual interface smartcard 1 in fig 1 may, for example, be a biometrically enabled payment card, and payments may be authorized by biometrically authenticating the user, as is schematically indicated in fig 1. Of course, a payment card such as that shown in fig 1 is not the only kind of dual interface smartcard for which embodiments of the present invention may be useful. Examples of other kinds of dual interface smartcards may include access cards, storage cards, identity cards, etc.

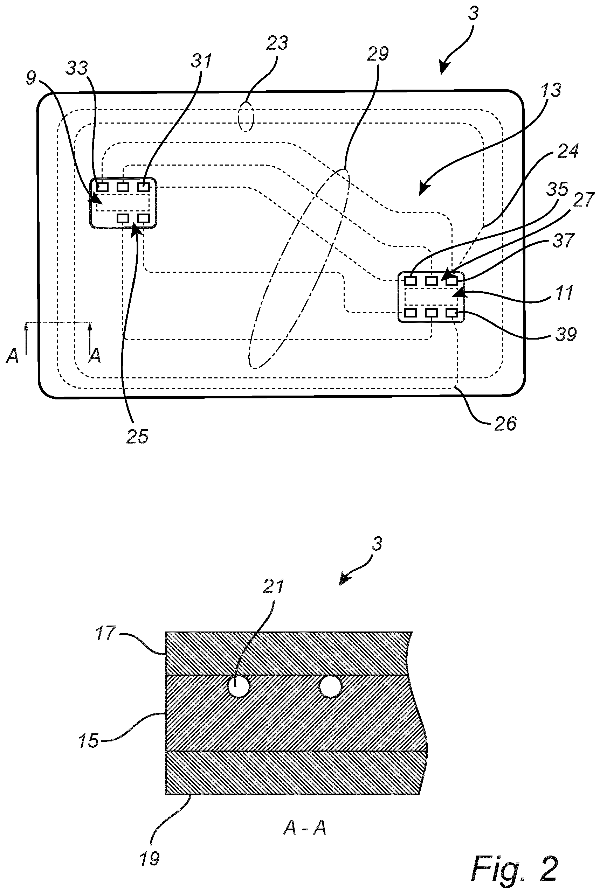

Fig 2 is a schematic illustration of the substrate 3 comprised in the dual interface smartcard 1 in fig 1. The substrate 3 comprises a contact pad module receiving portion 9, an auxiliary module receiving portion 11, and a conductor pattern 13. In the example configuration of fig 2, the substrate is shown as comprising a laminated stack of layers, including a carrier 15 and top 17 and bottom 19 cover layers. As is schematically indicated in the partial section view in fig 2, the conductor pattern 13 may be formed by conductive wire 21 embedded in the carrier 15. The wire 21 may suitably have an insulating sheath. Alternatively, the carrier 15 may be formed using PCB manufacturing techniques. The carrier 15 is often referred to as an "inlay", and methods suitable for manufacturing the dual interface smartcard 1 according to embodiments of the present invention are well known to those of ordinary skill in the art. In embodiments, the carrier 15 (the inlay) can be considered to be a substrate, and in other embodiments, the substrate 3 may include further layers, as indicated in fig 2.

In the example embodiment of the substrate 3 in fig 2, the contact pad module receiving portion 9 and the auxiliary module receiving portion 11 are provided in the form of cavities for receiving the contact pad module 5 and the auxiliary module 7, respectively, in a process that is usually referred to as "implantation".

As is indicated by the dashed lines in fig 2, the conductor pattern 13 includes an antenna coil 23, a first set of connectors 25 arranged in the contact pad module receiving portion 9, a second set of connectors 27 arranged in the auxiliary module receiving portion 11, and leads 29 connecting connectors in the first set of connectors 25 with connectors in the second set of connectors 27. The connectors in the first set of connectors 25 and the second set of connectors 27 may, for example, be solder bumps or any other type of connector used in the production of smartcards.

As is schematically indicated in fig 2, the antenna coil 23 has a first end 24 and a second end 26.

The first set of connectors 25 includes a VCC connector 31 for electrical connection with a VCC connector of the contact pad module 5 and a GND connector 33 for electrical connection with a GND connector of the contact pad module 5. The second set of connectors 27 includes a VCC connector 35 for electrical connection with a VCC connector of the auxiliary module 7 and a GND connector 37 for electrical connection with a GND connector of the auxiliary module 7. In the example configuration of fig 2, the GND connector 33 in the first set of connectors 25 is conductively connected to the GND connector 37 in the second set of connectors 27 and to the first end 24 of the antenna coil 23. The second set of connectors 27 also includes an antenna connector 39 that is conductively connected to the second end 26 of the antenna coil 23. In fig 2, the antenna coil 23 is shown as being connected to the auxiliary module receiving portion 11. It should be noted that the antenna coil 23 may alternatively be connected to the contact pad module receiving portion 9.

Through the dual purpose use of either the VCC connectors 31, 35 or the GND connectors 33, 37 (as in the example configuration of fig 2), the number of connections between the substrate 3 and the modules 5, 7 can be reduced, which provides for an improved production yield. The main improvement in the production yield is expected to arise from yield improvement in the module implantations, when the contact pad module 5 and the auxiliary module 7 are implanted in the substrate 3.

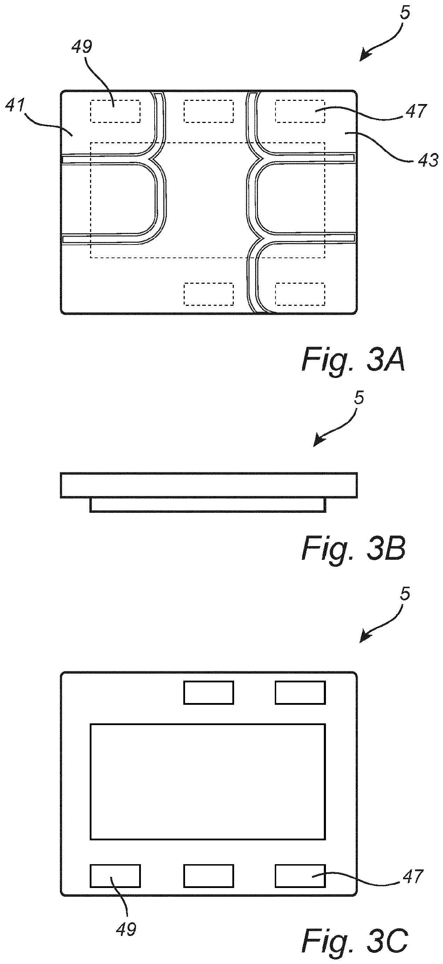

Figs 3A-C are schematic illustrations of a contact pad module 5 included in the dual interface smartcard 1 in fig 1. Fig 3A is a plane view of the top side of the contact pad module 5, fig 3B is a side view, and fig 3C is a plane view of the bottom side, facing the substrate 3 when the contact pad module 5 is implanted.

Referring first to fig 3A, the top side of the contact pad module 5 comprises, in conformance with the relevant ISO-standards, a VCC pad 41 for connection to a VCC (power supply voltage) connector of a card reader interface, and a GND pad 43 for connection to a GND (ground) connector of a card reader interface. The power supplied to the contact pad module 5 via the VCC pad 41 and the GND pad 43 may be used for powering the auxiliary module 7. To allow powering of the auxiliary module 7 when in contact mode, and communication between the auxiliary module 7 and the smart card processor 45 and/or a card reader, the contact pad module 5 comprises connectors for electrical connection to the above-mentioned first set of connectors 25 of the substrate 3. As is indicated in fig 3A and fig 3C, the connectors of the contact pad module 5 include a VCC connector 47 and a GND connector 49, for electrical connection to the VCC connector 31 and the GND connector 33, respectively, in the first set of connectors 25 of the substrate 3.

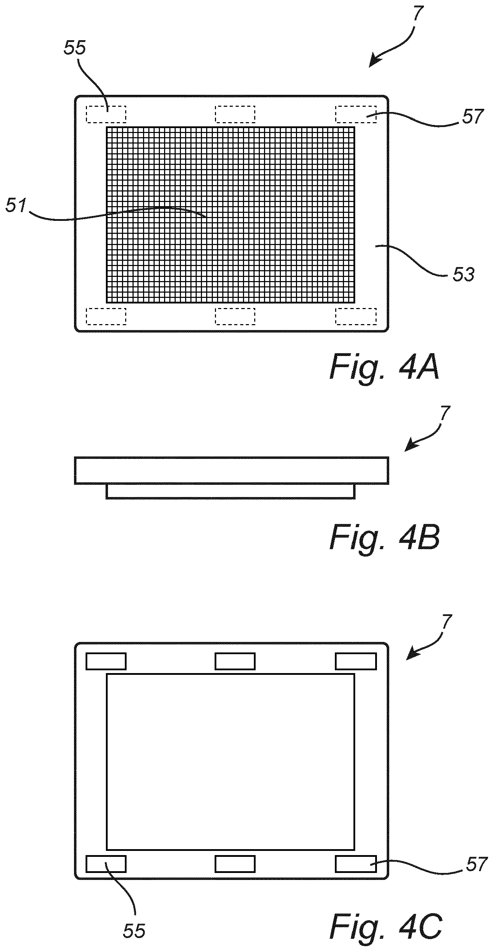

Figs 4A-C are schematic illustrations of an auxiliary module 7, here in the form of a fingerprint sensing system module, included in the dual interface smartcard 1 in fig 1. Fig 4A is a plane view of the top side of the auxiliary module 7, fig 4B is a side view, and fig 4C is a plane view of the bottom side, facing the substrate 3 when the auxiliary module 7 is implanted.

Referring first to fig 4A, the top side of the auxiliary module 7 comprises a fingerprint sensing surface 51, and an optional bezel 53 for conductive contact with the finger of the user of the dual interface smartcard 1. Although not shown in figs 4A-C, the auxiliary module 7 may be a system in package (SiP) including several integrated circuits, including a fingerprint sensor component and a biometric processor, for example. As is indicated in fig 4A and 4C, however, the auxiliary module 7 comprises connectors for electrical connection to the above-mentioned second set of connectors 27 of the substrate 3. As is indicated in fig 4A and fig 4C, the connectors of the auxiliary module 7 include a VCC connector 55 and a GND connector 57, for electrical connection to the VCC connector 35 and the GND connector 37, respectively, in the second set of connectors 27 of the substrate 3.

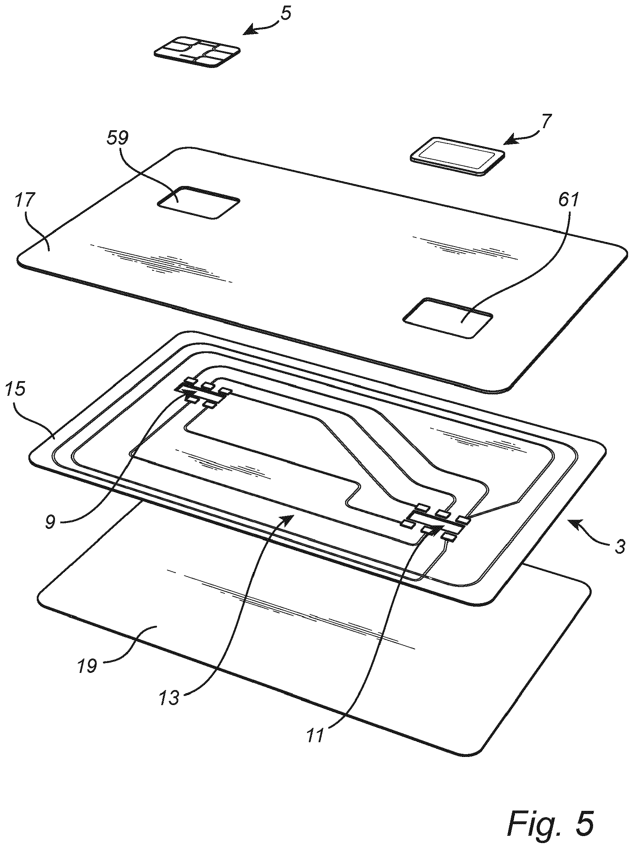

Fig 5 is an exploded view of the dual interface smartcard in fig 1, where the substrate 3 (in this case an inlay comprising the above-mentioned carrier 15, contact pad module receiving portion 9, auxiliary module receiving portion 11, and conductor pattern 13) is laminated between a top cover layer 17 and a bottom layer 19. As is schematically indicated in fig 5, the top cover layer 17 comprises a first opening 59 for receiving the contact pad module 5 and a second opening 61 for receiving the auxiliary module 7.

In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A substrate (3) for a dual interface smartcard (1), the substrate comprising:
a contact pad module receiving portion (9);
an auxiliary module receiving portion (11); and
a conductor pattern (13) including:
an antenna coil (23) having a first end (24) and a second end (26);
a first set of connectors (25) arranged in the contact pad module receiving portion (9) for electrical connection with corresponding connectors (47,49) of a contact pad module (5), the first set of connectors (25) including a GND connector (33) for electrical connection with a GND connector of the contact pad module, and a VCC connector (31) for electrical connection with a VCC connector of the contact pad module;
a second set of connectors (27) arranged in the auxiliary module receiving portion (11) for electrical connection with corresponding connectors (55,57) of an auxiliary module (7), the second set of connectors (27) including a GND connector (37) for electrical connection with a GND connector of the auxiliary module, and a VCC connector (35) for electrical connection with a VCC connector of the auxiliary module; and
leads (29) connecting connectors in the first set (25) with connectors in the second set (27), the leads (29) at least connecting the GND connector (33) in the first set of connectors (25) with the GND connector (37) in the second set of connectors (27), and connecting the VCC connector (31) in the first set of connectors (25) with the VCC connector (35) in the second set of connectors (27),
**characterized in that** one of the GND connector (33) and the VCC connector (31) in the first set of connectors (25) is conductively connected to one of the first end (24) and the second end (26) of the antenna coil (23).

2. The substrate (3) according to claim 1, wherein:
at least one of the first set of connectors (25) and the second set of connectors (27) includes an antenna coil connector (39); and
the antenna coil connector (39) is conductively connected to the other one of the first end (24) and the second end (26) of the antenna coil (23).

3. The substrate (3) according to claim 1 or 2, wherein the substrate comprises a non-conductive carrier (15).

4. The substrate (3) according to claim 3, wherein the conductor pattern (13) is formed by conductive wire (21) embedded in the non-conductive carrier (15).

5. The substrate (3) according to any one of the preceding claims, wherein:
the contact module receiving portion (9) includes a cavity for receiving the contact pad module (5); and
the auxiliary module receiving portion (11) includes a cavity for receiving the auxiliary module (7).

6. The substrate (3) according to any one of the preceding claims, comprising a laminated stack of layers.

7. A dual interface smartcard (1), comprising:
the substrate (3) according to any one of claims 1 to 6;
a contact pad module (5) having a set of connectors, the contact pad module (5) being attached to the substrate (3) in the contact pad module receiving portion (9) of the substrate in such a way that the set of connectors of the contact pad module (5) are electrically conductively connected to the first set of connectors (25) of the substrate (3); and
an auxiliary module (7) having a set of connectors, the auxiliary module (7) being attached to the substrate (3) in the auxiliary module receiving portion (11) of the substrate (3) in such a way that the set of connectors of the auxiliary module (7) are electrically conductively connected to the second set of connectors (27) of the substrate (3).

8. The dual interface smartcard (1) according to claim 7, wherein the auxiliary module (7) comprises a fingerprint sensor.

9. The dual interface smartcard (1) according to claim 7 or 8, wherein the contact pad module (5) comprises contact pads configured for connection with a smartcard reader.

## Patentansprüche

1. Substrat (3) für eine Doppelschnittstellen-Chipkarte (1), wobei das Substrat umfasst:
einen Kontaktflächenmodul-Aufnahmeabschnitt (9);
einen Hilfsmodul-Aufnahmeabschnitt (11); und
eine Leiterbahnstruktur (13), die enthält:
eine Antennenspule (23), die ein erstes Ende (24) und ein zweites Ende (26) aufweist;
einen ersten Satz von Verbindern (25), die in dem Kontaktflächenmodul-Aufnahmeabschnitt (9) angeordnet sind, zum elektrischen Verbinden mit entsprechenden Verbindern (47, 49) eines Kontaktflächenmoduls (5), wobei der erste Satz von Verbindern (25) einen GND-Verbinder (33) zum elektrischen Verbinden mit einem GND-Verbinder des Kontaktflächenmoduls und einen VCC-Verbinder (31) zum elektrischen Verbinden mit einem VCC-Verbinder des Kontaktflächenmoduls enthält;
einen zweiten Satz von Verbindern (27), die in dem Hilfsmodul-Aufnahmeabschnitt (11) zum elektrischen Verbinden mit entsprechenden Verbindern (55, 57) eines Hilfsmoduls (7) angeordnet sind, wobei der zweite Satz von Verbindern (27) einen GND-Verbinder (37) zum elektrischen Verbinden mit einem GND-Verbinder des Hilfsmoduls und einen VCC-Verbinder (35) zum elektrischen Verbinden mit einem VCC-Verbinder des Hilfsmoduls enthält; und
Leitungen (29), die Verbinder in dem ersten Satz (25) mit Verbindern in dem zweiten Satz (27) verbinden, wobei die Leitungen (29) mindestens den GND-Verbinder (33) in dem ersten Satz von Verbindern (25) mit dem GND-Verbinder (37) in dem zweiten Satz von Verbindern (27) verbinden, und den VCC-Verbinder (31) in dem ersten Satz von Verbindern (25) mit dem VCC-Verbinder (35) in dem zweiten Satz von Verbindern (27) verbinden,
**dadurch gekennzeichnet, dass** einer von dem GND-Verbinder (33) und dem VCC-Verbinder (31) in dem ersten Satz von Verbindern (25) leitfähig mit einem von dem ersten Ende (24) und dem zweiten Ende (26) der Antennenspule (23) verbunden ist.

2. Substrat (3) nach Anspruch 1, wobei:
mindestens einer der ersten Gruppe von Verbindern (25) und der zweiten Gruppe von Verbindern (27) einen Antennenspulenverbinder (39) enthält; und
der Antennenspulenverbinder (39) leitfähig mit dem anderen Ende des ersten Endes (24) und dem zweiten Ende (26) der Antennenspule (23) verbunden ist.

3. Substrat (3) nach Anspruch 1 oder 2, wobei das Substrat einen nicht-leitfähigen Träger (15) enthält.

4. Substrat (3) nach Anspruch 3, wobei die Leiterbahnstruktur (13) durch einen in den nicht-leitfähigen Träger (15) eingebetteten leitfähigen Draht (21) gebildet ist.

5. Substrat (3) nach einem der vorangehenden Ansprüche, wobei:
der Kontaktmodul-Aufnahmeabschnitt (9) einen Hohlraum zum Aufnehmen des Kontaktflächenmoduls (5) enthält; und
der Hilfsmodul-Aufnahmeabschnitt (11) einen Hohlraum zum Aufnehmen des Hilfsmoduls (7) enthält.

6. Substrat (3) nach einem der vorangehenden Ansprüche, das einen laminierten Stapel von Schichten umfasst

7. Doppelschnittstellen-Chipkarte (1), die umfasst:
das Substrat (3) nach einem der Ansprüche 1 bis 6;
ein Kontaktflächenmodul (5), das einen Satz von Verbindern aufweist, wobei das Kontaktflächenmodul (5) an dem Substrat (3) in dem Kontaktflächenmodul-Aufnahmeabschnitt (9) des Substrats in einer solchen Weise angebracht ist, dass der Satz von Verbindern des Kontaktflächenmoduls (5) elektrisch leitfähig mit dem ersten Satz von Verbindern (25) des Substrats (3) verbunden ist; und
ein Hilfsmodul (7), das einen Satz von Verbindern aufweist, wobei das Hilfsmodul (7) an dem Substrat (3) in dem Hilfsmodul-Aufnahmeabschnitt (11) des Substrats (3) in einer solchen Weise befestigt ist, dass der Satz von Verbindern des Hilfsmoduls (7) elektrisch leitfähig mit dem zweiten Satz von Verbindern (27) des Substrats (3) verbunden ist.

8. Doppelschnittstellen-Chipkarte (1) nach Anspruch 7, wobei das Hilfsmodul (7) einen Fingerabdrucksensor enthält.

9. Doppelschnittstellen-Chipkarte (1) nach Anspruch 7 oder 8, wobei das Kontaktflächenmodul (5) Kontaktflächen umfasst, die für eine Verbindung mit einem Chipkartenleser konfiguriert sind.

## Revendications

1. Substrat (3) pour une carte à puce à double interface (1), le substrat comprenant :
une partie de réception de module de plage de contact (9) ;
une partie de réception de module auxiliaire (11) ; et
un motif de conducteurs (13) incluant :
une bobine d'antenne (23) comportant une première extrémité (24) et une deuxième extrémité (26) ;
un premier ensemble de connecteurs (25) agencés dans la partie de réception de module de plage de contact (9) pour une connexion électrique à des connecteurs (47, 49) correspondants d'un module de plage de contact (5), le premier ensemble de connecteurs (25) incluant un connecteur GND (33) pour une connexion électrique à un connecteur GND du module de plage de contact, et un connecteur VCC (31) pour une connexion électrique à un connecteur VCC du module de plage de contact ;
un deuxième ensemble de connecteurs (27) agencés dans la partie de réception de module auxiliaire (11) pour une connexion électrique à des connecteurs (55, 57) correspondants d'un module auxiliaire (7), le deuxième ensemble de connecteurs (27) incluant un connecteur GND (37) pour une connexion électrique à un connecteur GND du module auxiliaire, et un connecteur VCC (35) pour une connexion électrique à un connecteur VCC du module auxiliaire ; et
des fils (29) connectant des connecteurs dans le premier ensemble (25) à des connecteurs dans le deuxième ensemble (27), les fils (29) connectant au moins le connecteur GND (33) dans le premier ensemble de connecteurs (25) au connecteur GND (37) dans le deuxième ensemble de connecteurs (27), et connectant le connecteur VCC (31) dans le premier ensemble de connecteurs (25) au connecteur VCC (35) dans le deuxième ensemble de connecteurs (27),
**caractérisé en ce que** l'un parmi le connecteur GND (33) et le connecteur VCC (31) dans le premier ensemble de connecteurs (25) est connecté de manière conductrice à l'une parmi la première extrémité (24) et la deuxième extrémité (26) de la bobine d'antenne (23).

2. Substrat (3) selon la revendication 1, dans lequel :
au moins l'un parmi le premier ensemble de connecteurs (25) et le deuxième ensemble de connecteurs (27) inclut un connecteur de bobine d'antenne (39) ; et
le connecteur de bobine d'antenne (39) est connecté de manière conductrice à l'autre parmi la première extrémité (24) et la deuxième extrémité (26) de la bobine d'antenne (23).

3. Substrat (3) selon la revendication 1 ou 2, dans lequel le substrat comprend un support non conducteur (15).

4. Substrat (3) selon la revendication 3, dans lequel le motif de conducteurs (13) est constitué d'un fil conducteur (21) intégré au support non conducteur (15).

5. Substrat (3) selon l'une quelconque des revendications précédentes, dans lequel :
la partie de réception de module de contact (9) inclut une cavité pour recevoir le module de plage de contact (5) ; et
la partie de réception de module auxiliaire (11) inclut une cavité pour recevoir le module auxiliaire (7).

6. Substrat (3) selon l'une quelconque des revendications précédentes, comprenant une pile stratifiée de couches.

7. Carte à puce à double interface (1), comprenant :
le substrat (3) selon l'une quelconque des revendications 1 à 6 ;
un module de plage de contact (5) comportant un ensemble de connecteurs, le module de plage de contact (5) étant raccordé au substrat (3) dans la partie de réception de module de plage de contact (9) du substrat de telle manière que l'ensemble de connecteurs du module de plage de contact (5) soit connecté de manière électriquement conductrice au premier ensemble de connecteurs (25) du substrat (3) ; et
un module auxiliaire (7) comportant un ensemble de connecteurs, le module auxiliaire (7) étant raccordé au substrat (3) dans la partie de réception de module auxiliaire (11) du substrat (3) de telle manière que l'ensemble de connecteurs du module auxiliaire (7) soit connecté de manière électriquement conductrice au deuxième ensemble de connecteurs (27) du substrat (3).

8. Carte à puce à double interface (1) selon la revendication 7, dans laquelle le module auxiliaire (7) comprend un capteur d'empreintes digitales.

9. Carte à puce à double interface (1) selon la revendication 7 ou 8, dans laquelle le module de plage de contact (5) comprend des plages de contact configurées pour une connexion avec un lecteur de carte à puce.
